# DEMANDE DE BREVET EUROPEEN

(11) **EP 1 672 491 A1**
(43) Date de publication de la demande: **21.06.2006**
(21) Numéro de dépôt: 05112289.3
(22) Date de dépôt: 16.12.2005
(51) Int. Cl.: G06F 9/445, G06F 11/14

(54) **Téléchargement pour un compteur d'énergie**

(30) Priorité: 17.12.2004 FR 0456059
(71) Demandeur: Actaris SAS, 92100 Boulogne Billancourt (FR)
(72) Inventeur: Guillot, Hélène, 86280, Saint Benoit (FR); Cornet, Philippe, 86360, Chasseneuil du Poitou (FR)
(74) Mandataire: Hervouet, Sylvie

(57) **Abrégé**

La présente invention concerne un procédé de téléchargement d'un nouveau code applicatif dans un compteur d'énergie (C) du type comportant au moins une mémoire réinscriptible (1) destinée à mémoriser le code applicatif, et un microcontrôleur (2) connecté à la mémoire pour l'exécution du code. Selon l'invention, le nouveau code applicatif comprend en toute fin du code, une information de contrôle (IC) et, en début de code, une information de localisation (IL) destinée à indiquer l'adresse du code dans laquelle l'information de contrôle (IC) doit se situer. Après mémorisation du code téléchargé dans la mémoire (1), le compteur peut contrôler si tout le code a bien été reçu en vérifiant, à partir de la lecture de l'information de localisation, la présence de l'information de contrôle dans la mémoire réinscriptible. En cas d'absence, le microcontrôleur (2) reste dans le mode limité de fonctionnement, pour autoriser un nouveau téléchargement.

## Description

La présente invention concerne le domaine des compteurs d'énergie, et plus particulièrement le problème de la mise à jour à distance (ou téléchargement) des applications logicielles ou codes applicatifs permettant le fonctionnement des compteurs d'énergie.

Aujourd'hui, un compteur d'énergie, par exemple électrique, destiné à mesurer la consommation électrique d'un utilisateur à des fins de tarification, dispose d'un microcontrôleur connecté par une liaison de type bus à une ou plusieurs mémoires de type flash équipant le compteur. La mémoire flash est une mémoire à semi-conducteurs, réinscriptible et non volatile, c'est-à-dire une mémoire capable de conserver les données même lorsque l'alimentation électrique est coupée. Dans ces mémoires sont stockés des programmes ou codes applicatifs permettant le fonctionnement du compteur, ou encore les données qui vont servir notamment à la tarification.

Après installation d'un compteur d'énergie chez un utilisateur, il peut s'avérer nécessaire de modifier le code applicatif contenu dans la mémoire flash, soit parce que le code existant présente des dysfonctionnements qu'il est nécessaire de corriger, soit parce qu'il est possible de faire évoluer ce code en vue d'améliorer ou de compléter les fonctionnalités du compteur.

A l'heure actuelle, cette modification du code applicatif peut être effectuée soit directement sur le site d'installation du compteur, soit à distance en téléchargeant le nouveau code applicatif via un modem de communication, au travers d'un ou plusieurs réseaux de télécommunications (PSTN, GSM, GPRS ou Internet). Nous nous intéresserons dans la suite uniquement à ce cas de téléchargement ou de mise à jour à distance.

Compte tenu du fait que les mémoires flash utilisées ont une taille mémoire limitée, il n'est généralement pas possible de télécharger un nouveau code applicatif tout en conservant l'ancien code applicatif. Avant le téléchargement d'un nouveau code, on procède en conséquence à l'effacement de l'ancien code applicatif, par exemple en envoyant une commande d'effacement via le modem de communication. Seul un petit programme applicatif, dit programme de chargement, doit subsister au niveau du compteur après l'effacement de l'ancien code applicatif. En effet, en cas de problème au cours du téléchargement, du type par exemple coupure de la liaison de communication ou coupure électrique du réseau d'alimentation du compteur, le compteur d'énergie doit néanmoins pouvoir être placé à nouveau dans un mode limité de fonctionnement qui permette l'accès à ce programme de chargement pour réinitier une procédure de téléchargement.

Aujourd'hui, le passage du compteur d'énergie dans ce mode limité de fonctionnement s'effectue de manière manuelle par une action locale du technicien. En d'autres termes, chaque fois qu'un problème dans le téléchargement d'un code applicatif dans le compteur intervient, un technicien doit se rendre à nouveau sur site pour placer le compteur dans le mode limité de fonctionnement décrit précédemment, de façon à autoriser un nouveau téléchargement. L'intérêt évident d'un téléchargement est donc en fait limité.

La présente invention a pour but de rendre possible le téléchargement sans intervention sur site d'un technicien si un problème de téléchargement survient.

Pour ce faire, la présente invention a pour objet un procédé de téléchargement d'un nouveau code applicatif dans un compteur d'énergie conforme à la revendication 1.

La présente invention a également pour objet un compteur d'énergie selon la revendication 3.

Les différents aspects de l'invention sont décrits ci-après en référence aux figures annexées, dans lesquelles :
- la figure 1 illustre les différentes étapes du procédé selon l'invention ;
- la figure 2 illustre, sous forme schématique, les différents éléments d'un compteur selon un premier mode de réalisation permettant la mise en oeuvre du procédé selon l'invention ;
- la figure 3 illustre, sous forme schématique, les différents éléments d'un compteur selon un deuxième mode de réalisation permettant la mise en oeuvre du procédé selon l'invention.

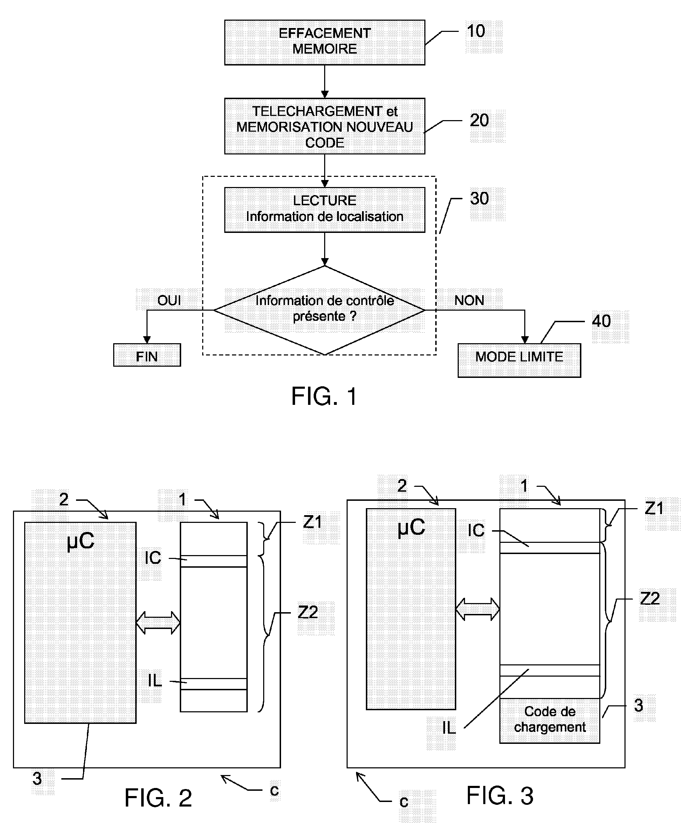

En référence aux figures 2 et 3, le compteur d'énergie C considéré comporte de manière classique une mémoire réinscriptible 1, par exemple de type flash, pour stocker le code applicatif nécessaire au fonctionnement du compteur, ainsi qu'un microcontrôleur 2 connecté à cette mémoire, par exemple via une liaison de type bus, pour permettre notamment l'exécution du code applicatif. Lors de sa première installation sur site, le compteur comporte, stocké dans la mémoire 1, un code applicatif, et l'on suppose dans la suite que l'on souhaite modifier ce code par téléchargement d'un nouveau code applicatif.

En référence à la figure 1, le procédé selon l'invention comprend une première étape 10 dans lequel le microcontrôleur 2 commande l'effacement du code applicatif stocké dans la mémoire 1. Cette commande peut être effectuée soit suite à l'intervention locale d'un technicien au niveau du compteur, soit à distance, en utilisant une commande d'effacement transitant par le modem de communication (non représenté) utilisé pour le téléchargement du nouveau code applicatif. A l'issue de cette étape d'effacement 10, le compteur ne dispose plus que d'un petit programme applicatif ou code de chargement 3, situé, dans e cas de la figure 2, en interne au niveau du microcontrôleur, ou alors, dans la variante représentée sur la figure 3, dans la mémoire 1.

Une seconde étape 20 consiste alors à effectuer le téléchargement proprement dit, via le modem de communication, du nouveau code applicatif, et de stocker ce nouveau code applicatif dans la mémoire 1.

Selon une caractéristique importante de l'invention, le code applicatif qui doit être téléchargé comprend, en toute fin de code, une information de contrôle IC, et en début de code, une information de localisation IL destinée à indiquer l'adresse du code dans laquelle l'information de contrôle IC est censée se trouver. L'information de contrôle est par exemple constituée par une somme de contrôle (connue sous la terminologie anglo-saxonne de « checksum ») résultant de la somme de tous les octets du code applicatif.

Lorsque le téléchargement s'effectue correctement, la mémoire 1 du compteur à l'issue de l'étape 20 comporte l'intégralité du code dans une zone Z2, comme représenté sur l'une ou l'autre des figures 2 et 3. A noter que sur ces figures, la zone référencée Z1 représente une zone vide de la mémoire après téléchargement. Pour illustrer les notions de début et de fin de code, on a choisi par convention de représenter le stockage du code comme un empilement d'octets, le dernier octet étant l'information de contrôle IC, alors que l'information de localisation IL se situe dans la zone de début de code, située par convention en bas de la mémoire 1 sur les figures.

Dans une troisième étape 30 du procédé selon l'invention, le compteur va lui-même pouvoir contrôler si le téléchargement est correct, à savoir si le code qu'il a reçu et stocké dans sa mémoire 1 est bien complet. Pour ce faire, le microcontrôleur 2 va lire tout d'abord l'information de localisation IL située en début de code, afin de connaître l'adresse à laquelle l'information de contrôle IC est supposée être. Il va rechercher ensuite la présence de l'information de contrôle IC à l'adresse indiquée. Si l'information de contrôle est bien présente, le compteur peut conclure que la procédure de téléchargement a correctement fonctionné et peut prendre fin. Si, au contraire, il ne trouve pas l'information de contrôle IC à la fin du code stocké dans la mémoire 1, cela signifie qu'il y a eu un problème dans le téléchargement, dû par exemple à une interruption de communication dans la ligne de télétransmission. Dans ce cas, le compteur va rester dans le mode limité de fonctionnement grâce au microcontrôleur 2 et au code de chargement 3. Dans ce mode limité, il est possible de réitérer les étapes précédemment décrites de téléchargement sans qu'il soit nécessaire à un technicien d'intervenir localement au niveau du compteur.

## Revendications

1. Procédé de téléchargement d'un nouveau code applicatif dans un compteur d'énergie, ledit compteur d'énergie étant du type comportant au moins une mémoire réinscriptible (1) destinée à mémoriser ledit code applicatif, et un microcontrôleur (2) connecté à la mémoire pour l'exécution dudit code applicatif, le procédé étant **caractérisé en ce qu'**il comporte les étapes successives suivantes :
- Une première étape (10) d'effacement dans laquelle le microcontrôleur commande l'effacement d'un ancien code applicatif contenu dans la mémoire réinscriptible (1) ;
- Une seconde étape (20) de téléchargement dans laquelle ledit nouveau code applicatif est téléchargé, puis mémorisé dans ladite mémoire réinscriptible, ledit nouveau code applicatif comprenant, en toute fin du code, une information de contrôle (IC) et, en début de code, une information de localisation (IL) destinée à indiquer l'adresse du code dans laquelle l'information de contrôle (IC) doit se situer ;
- Une troisième étape (30) de contrôle dans laquelle le microcontrôleur (2) commande la vérification, à partir de la lecture de l'information de localisation, de la présence de l'information de contrôle dans la mémoire réinscriptible;
- Une quatrième étape (40) lors de laquelle, en cas d'absence de l'information de contrôle dans la mémoire à l'issue de la troisième étape (30), le microcontrôleur (2) reste dans un mode limité de fonctionnement, pour autoriser un nouveau téléchargement.

2. Procédé selon la revendication 1, **caractérisé en ce que** ladite information de contrôle (IC) est une somme de contrôle résultant de la somme de tous les octets du nouveau code applicatif.

3. Compteur d'énergie du type comportant des moyens pour recevoir, par téléchargement, un nouveau code applicatif, au moins une mémoire réinscriptible (1) destinée à mémoriser ledit code applicatif, et un microcontrôleur (2) connecté à la mémoire pour l'exécution dudit code applicatif, caractérisé en ce qu**'**il comporte :
- des moyens de contrôle (2) commandant la vérification, après mémorisation du nouveau code applicatif téléchargé dans ladite mémoire réinscriptible (1), de la présence, en toute fin du code, d'une information de contrôle (IC) à partir de la lecture d'une information de localisation (IL) située en début de code et destinée à indiquer l'adresse du code dans laquelle l'information de contrôle (IC) doit se situer ;
- des moyens de commande (2, 3), en cas d'absence de l'information de contrôle dans la mémoire, pour rester dans un mode limité de fonctionnement, et autoriser un nouveau téléchargement.

4. Compteur d'énergie selon la revendication 3, **caractérisé en ce que** lesdits moyens de commande comportent un code de chargement (3) interne au microcontrôleur (3).

5. Compteur d'énergie selon la revendication 3, **caractérisé en ce que** lesdits moyens de commande comportent un code de chargement (3) stocké dans la mémoire (1).
